Europäisches Patentamt

European Patent Office

Office européen des brevets

(19)

(11) **EP 1 063 538 A2**

(12) **EUROPEAN PATENT APPLICATION**

(43) Date of publication:
**27.12.2000 Bulletin 2000/52**

(51) Int Cl.[7]: **G01T 1/00**, G01T 1/20,
G01V 5/00

(21) Application number: **00305276.8**

(22) Date of filing: **22.06.2000**

| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **23.06.1999 GB 9914705**<br><br>(71) Applicant: **The Nottingham Trent University Nottingham NG1 4BU (GB)** | (72) Inventor: **Evans, Paul, Dr.**<br>**Nottingham NG1 4BU (GB)**<br><br>(74) Representative: **Rackham, Anthony Charles et al**<br>**Lloyd Wise, Tregear & Co.,**<br>**Commonwealth House,**<br>**1-19 New Oxford Street**<br>**London WC1A 1LW (GB)** |

(54) **Linear array scintillator system**

(57)    A linear array detector (LA) for use in creating an x-ray image after passage of a thin collimated curtain of these x-rays through an object is described. This detector has alternating portions of first and second types (Tk5,Tn5) along its length and of pixel size as measured along the length of the linear array detector. Each of the said types comprises scintillator material, optionally filter material (F), and detector means for detecting light signals corresponding to x-ray impingement on the scintillator material. The said first type of portion having a thickness of scintillator material and/or a filter such that the scintillator material provides a signal corresponding to the passage of the x-rays through an object or portion of that object of relatively low molecular weight and the said second type of portion having a thickness of scintillator material and/or a filter such that the scintillator material provides a signal corresponding to the passage of the x-rays through an object or portion of that object of relatively high molecular weight. In this way one can discriminate between higher and lower molecular weight materials and for example show potential explosive material which tends to be lower molecular weight material.

Figure 4A

F2     F1     F2

F1

S

$P_1$    $P_2$    $P_1$    $P_2$

Linear array direction

X-ray beam input

T

$P_1$

$P_2$   $P_1$

Optical output   $P_2$

$P_1$

Signals to photodiodes
or
optical fibres

# Figure 4 B

**Description**

This invention relates to x-ray imaging and in particular to a linear array detector for x-rays, an x-ray machine which can discriminate between different materials in an object and not just produce a shadowgraph of an object, and to methods of calibrating the usage of linear array detectors.

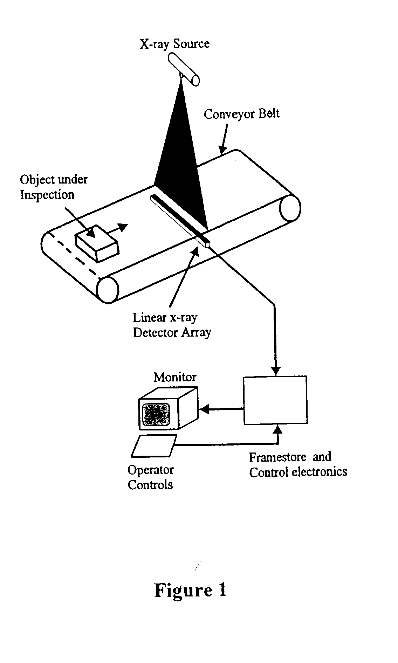

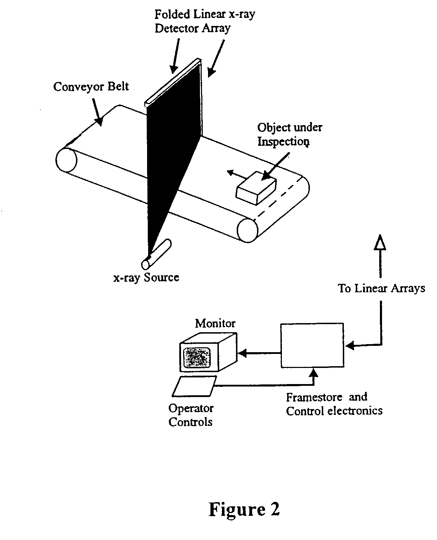

A standard technique for x-ray imaging is to use a linear array detector "illuminated" by a collimated thin curtain of x-rays. The object of interest is then moved linearly through the x-ray beam at constant speed and the linear detector creates a line by line image of the object which is usually stored in a frame store or similar storage medium. The basic principle is illustrated in Figure 1 of the accompanying drawings. Systems used for security screening often use a folded array detector but the basic mechanism is just the same. This is shown in Figure 2 of the accompanying drawings.

It has been shown previously in European Patent No. 610 084 that a stereoscopic image can be derived from a single x-ray source by using two divergent beams and two linear array detectors. The resulting stereoscopic pair of images can be processed as described in that Patent to produce a 2½D image of the object being viewed. A full discussion of such techniques are given in a paper entitled "3-D X-Ray Image Modelling - Latest Developments" by J. P. O. Evans, M. Robinson, S. X. Godber and in a paper entitled "Solid Image Models Derived from Security X-Ray Equipment" by M. Robinson, J. P. O. Evans, S. X. Godber and N. Murray, the latter paper having been presented at "European Convention on Security and Detection", 16-18 May 1995, Conference Publication No. 408,IEE,1995. Reference is therefore made to all of these documents, the contents of which are incorporated herein by reference.

It is also known that linear detectors are available which are capable of providing materials discrimination data. To achieve this, for each pixel a sandwich arrangement of silicon diode detectors, scintillating materials and x-ray filters are often used. A typical arrangement is as shown in Figure 3A of the accompanying drawings.

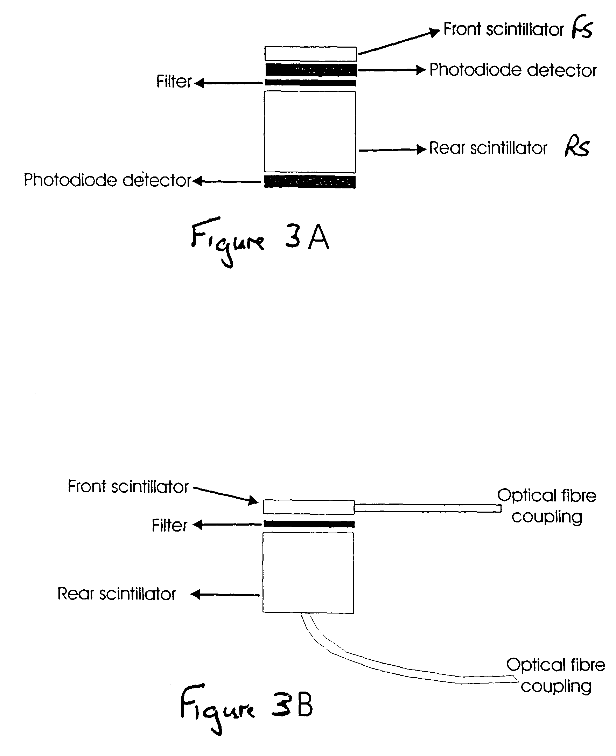

The means of detecting the optical signal in the scintillator, generated by the x-ray beam, can be by the use of photodiodes attached to the scintillators or by optical fibres coupled between the scintillators and the detectors (Figure 3B of the accompanying drawings).

As shown in Figure 3A the front scintillator FS is exposed to the whole x-ray signal whilst the filter absorbs the less energetic x-rays and so the rear scintillator RS detects only the more energetic x-rays. This difference can be used algebraically to discriminate between low and high atomic number material. This can be important in a baggage handling system since organic i.e. low molecular weight, materials may correspond with explosives.

Therefore for a basic single linear array detector system to have this materials discrimination capability it means that two signals for each pixel are generated. For a stereoscopic system, however the number of signals is doubled again to four. This begins to pose a problem in terms of data collection, transmission, and data handling and processing.

There is therefore need for a detector arrangement which will provide both materials identification and stereoscopic images but which is economical in terms of the number of signals it produces.

According to the invention in one aspect there is provided a linear array detector for use in creating an x-ray image after passage of a thin collimated curtain of these x-rays through an object, this detector having alternating portions of first and second types along its length and of pixel size as measured along the length of the linear array detector, i.e. each portion which will ultimately contribute to the information contained in a pixel of the resultant image, each of the said types comprising scintillator material, optionally filter material, and detector means for detecting light signals corresponding to x-ray impingement on the scintillator material, the said first type of portion having a thickness of scintillator material and/or a filter such that the scintillator material provides a signal corresponding to the passage of the x-rays through an object or portion of that object of relatively low molecular weight and the said second type of portion having a thickness of scintillator material and/or a filter such that the scintillator material provides a signal corresponding to the passage of the x-rays through an object or portion of that object of relatively high molecular weight.

Also according to the invention there is provided an x-ray machine for producing a stereoscopic image of an object comprising:

an x-ray source with two or more diverging but parallel curtain beams of x-rays,
two or more linear array detectors, each associated with one of the said beams,
means for passing the object under test past and through the curtain beams,
the output of the detector being processed to provide a stereoscopic pair of images of the said object,

characterised in that each linear array detector has alternating portions of first and second types along its length and of pixel size as measured along the length of the linear array detector, each of the said types comprising scintillator material, optionally filter material, and detector means for detecting light signals corresponding to x-ray impingement on the scintillator material, the said first type of portion having a thickness of scintillator material and/or a filter such that the scintillator material provides a signal corresponding to the passage of the x-rays through an object or portion of that object of relatively low molecular weight and the said second type of portion having a thickness of scintillator material and/or a filter such that the scintillator material provides a signal corresponding to the passage of the x-rays through an object or portion of that object of relatively high molecular weight.

The invention will be described, by way of example, with reference to the accompanying drawings, in which:

Figure 1 is a diagram showing x-ray imaging using a linear array detector;
Figure 2 is a diagram similar to Figure 1 but showing the use of a folded array detector;
Figure 3A is a diagram of a sandwich detector;
Figure 3B is a diagram of a detector shown in Figure 3A using optical Fibres coupled between the scintillator and detectors;
Figure 4A is a two-part diagram showing a linear array according to one embodiment of the invention;
Figure 4B is a two-part diagram showing a linear array according to another embodiment of the invention; and
Figures 5 to 7 are diagrams illustrating methods of weighting signals to give an effective grey scale level.

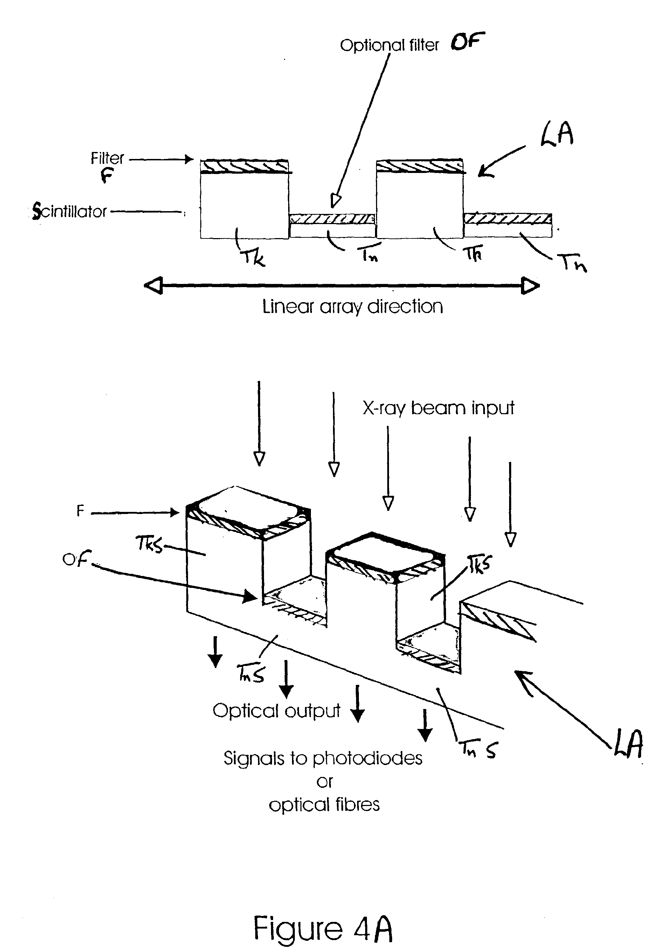

The first and second types of portions of the linear array can be constructed in various ways to achieve the required arrangement such that alternating pixels detect independently the higher energy components of the x-ray signal and the lower energy components of the x-ray signal to provide the discrimination required. Thus, in one embodiment there can be alternating thicker and thinner portions of scintillator, the material of the scintillator providing the required attenuation in the thicker layer of scintillator. In some cases that may not be sufficient and so the attenuation can be supplemented by filter layers associated with the thicker portion of scintillator or filter materials over both portions. Such an arrangement of thicker and thinner scintillator portions is shown in Figure 4A. Thus, the detector consists of alternating thick and thin portions Tk and Tn of scintillator S side by side to make up the linear array LA. The thick regions Tk have a filter F on their top surfaces which blocks some of the x-ray components in the beam. This provides the facility to broadly isolate the effects due to Compton scattering detected in one of the regions of scintillator and those due to the photoelectric effect picked up by the other. The thin regions Tn may also have a filter OF on their top surfaces if necessary.

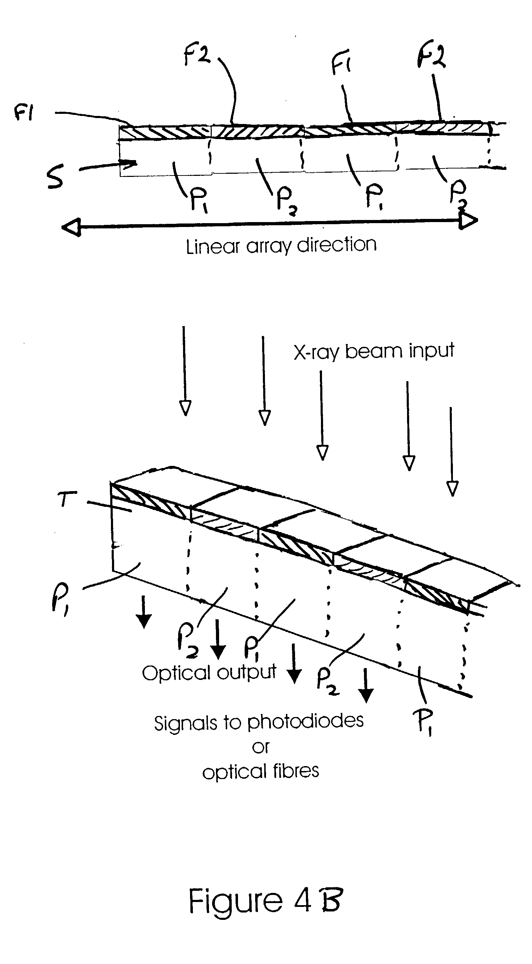

In an alternative construction shown in Figure 4B, the scintillator S is of constant thickness but alternate pixel portions of this are provided with filters $F_1$ and $F_2$ to provide the discrimination. Thus, one portion of the scintillator can be covered with a filter $F_1$ of one thickness and/or nature, whilst the other portion need not be provided with a filter or can be provided with a filter $F_2$ of a different thickness and/or nature. In this way we can achieve a situation such that one portion will be exposed to substantially the full x-ray signal, i.e. equivalent to the front scintillator FS in Figure 3A, whilst alternative and adjacent portions are exposed to an attenuated signal equivalent to the rear scintillators, i.e. equivalent to the rear scintillator RS in Figure 3A.

The materials suitable for use as the scintillator material are well known and suitable detectors such as photodiodes are also well known in this art and so no further discussion is believed unnecessary.

The filters which can be used are also well known. For example, these can be of copper or tungsten and of differing thicknesses depending upon the degree of attenuation of the x-rays required. This is also so well known that further discussion is believed unnecessary.

The length of the Tk and Tn portions in Figure 4A or the portions $P_1$ and $P_2$ in Figure 4B along the length of the linear array will correspond with the pixel resolution required. For a machine designed to x-ray baggage, a resolution along the array of about 1 mm is generally satisfactory. Therefore each portion can be about 1 mm x 1 mm in plan. More generally for objects of such a nature the length of each portion along the length of the linear array will be from 1 to 10 mm. For use with smaller objects than baggage, e.g. in the examination of small electronic items as described in our European Patent Application No. 303342.0, the pixel size, i.e. resolution, may need to be smaller, e.g. in the range of 10 microns to 1 mm. In general, therefore, the pixel resolution along the length of the linear array according to the invention will depend upon the object to be examined and will vary from 10 microns to 10 mm.

In the standard detector shown in Figures 3A and 3B it is the relative magnitudes of a front signal F from the front scintillator FS and rear signal R from the rear scintillator RS which are used to provide the materials discrimination information. The simple expression |R - F| can be used for this purpose since when this value is plotted against transmission

$$\left( \frac{R + F}{2} \right),$$

a clear difference between organic and inorganic materials is given.

For the linear array detectors a number of materials discrimination protocols are possible. Firstly, however, the actual grey scale resolution of the image from the detector should be processed such that it is equivalent to the standard sandwich type detector shown in Figure 3A. Because of the thick and thin portions of scintillator and/or the differing effects of the filters, there will be two different dynamic ranges of grey scale along the detector.

Therefore, one needs to apply an appropriate weighting to these signals in order to obtain similar grey level outputs from adjacent portions of the array. This can be derived empirically or theoretically as a function of spectral output of the x-ray source, the scintillator, the filter and the dynamic range of the signal sampling.

One manner of weighting the signals is to average them so that an effective grey scale image will be formed having the same full resolution from each portion as the sandwich detector shown in Figure 3A. Averaging can, however, lead to blurring of image detail under some circumstances.

In a standard system the grey level is usually assigned a colour palette which indicates regions of principally organic, inorganic or mixed material. For a linear array detector, however, there are a number of options available which could be used singly or, when appropriate, in combination and these options form other aspects of this invention. In each instance a materials identification criteria is established which is based on various signal weightings. These methods can be used with any linear array, e.g. that shown in Figures 3A and 3B as well as those shown in Figures 4A and 4B, particularly when more than one array is used to give signals corresponding to stereoscopic pairs of images.

A simple method is to weight the signals of adjacent scintillator sections and treat them in the same way as the rear R and front F signals of the sandwich detector. Thus, the signal from one portion equivalent to the rear scintillator RS of Figure 3A would become a signal K and the signal from the adjacent portions equivalent to the front scintillator FS of Figure 3A would become a signal N. Then $|K - N|$ will be plotted against transmission

$$\left(\frac{K + N}{2}\right).$$

In that connection the signal K could be the signal from the thick scintillator portion Tk in Figure 4A or the signal from the portion $P_1$ in Figure 4B, whilst the signal N could be the signal from the thin scintillator portion Tn in Figure 4A or from the portion $P_2$ in Figure 4B.

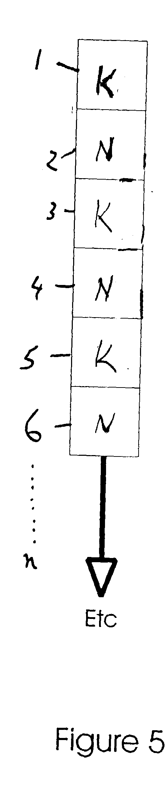

Therefore referring to Figure 5, the effective grey level for pixel 1 will be derived from

$$\left(\frac{K_1 + N_2}{2}\right)$$

and the materials identification for pixel 1 will be derived by plotting $|K_1 - N_2|$ versus

$$\left(\frac{K_1 + N_2}{2}\right),$$

the effective grey level for pixel 2 will be derived from

$$\left(\frac{N_2 + K_3}{2}\right),$$

and the materials identification for pixel 2 will be derived by plotting $|N_2 - K_3|$ against

$$\left(\frac{N_2 + K_3}{2}\right),$$

and so on, where n corresponds to the number of the pixel along the array.

From this analysis the assignment of materials identification to each pixel can be realised. Each pixel along the detector array would be paired with its nearest neighbour as shown in Figure 5. The effective grey scale is achieved and the materials identification symbolised by assigning the appropriate colour from the industry standard colour palette.

Therefore according to another aspect of the invention there is provided a method of weighting signals from adjacent pixels along a linear array used for detecting x-rays and thereafter determining material identification, the array having alternate portions which are arranged to detect higher and lower molecular weight materials and provide corresponding output signals K and N, in which an effective grey scale level is determined as

$$\left( \frac{K_n + N_{(n+1)}}{2} \right)$$

for a signal K and the equivalent

$$\left( \frac{N_n + K_{(n+1)}}{2} \right)$$

for a signal N, and thereafter the material discrimination is derived by plotting $|K_n - N_{(n+1)}|$ or $|N_n - K_{(n+1)}|$ against

$$\left( \frac{K_n + N_{(n+1)}}{2} \right) \ \text{or} \ \left( \frac{N_n + K_{(n+1)}}{2} \right),$$

respectively, where n corresponds to the number of the pixel along the array.

Although the beam paths for adjacent pixels will be slightly different, the size of threat objects, such as explosives, in a security screening application, will be large in comparison to pixel size. This means that whilst there is no compromise on fundamental image resolution, there may be some relaxation on materials identification resolution in certain circumstances. However, given that the dual role of even the sandwich type detector (Figure 3A) is to provide a high resolution image along with a materials identification indication, then there would appear to be no major disadvantage in using the new detector which performs in just the same way.

A significant point here is that for either type of detector, the materials discrimination feature will always be a compromise due to the fact that any particular ray path of the x-ray beam could transit through a variety of different materials before striking the scintillators. Thus the signal information received will never provide absolute atomic number information and so cannot necessarily be used as a scientific laboratory test but nonetheless a reasonably reliable comparative materials identification decision can usually be made and this is satisfactory for situations such as baggage examination where if there is doubt the baggage can always be examined further by opening it.

In a second method also described with reference to Figure 5 any particular pixel will have its signal weighted with respect to the signals on each side in the array. For example, in the case of the array of Figure 4A, a thick scintillator Tk will have a thin section Tn as nearest neighbour in both directions along the linear array. In a similar manner in the array of Figure 4B, one portion $P_1$ will have as its nearest neighbour in both directions along the array a portion $P_2$. Therefore applying the same notation as with Figure 5, with K corresponding to a signal for a thick portion Tk (Figure 4A) or a portion $P_1$ (Figure 4B), and N corresponding to a signal from a thin portion Tn (Figure 4A) or a portion $P_2$ (Figure 4B), the effective grey level for say pixel 3 along the array is given by $\frac{K_3}{2} + \frac{(N_2 + N_4)}{4}$. The equivalent for a pixel N in position 4 is $\frac{N_4}{2} + \frac{(K_3 + K_5)}{4}$. Thereafter the materials identification for pixel n along the array is given by plotting

$$\left| \ K_n - \left( \frac{N_{(n-1)} + N_{(n+1)}}{2} \right) \ \right| \ \text{or} \ \left| \ N_n - \left( \frac{K_{(n-1)} + K_{(n+1)}}{2} \right) \ \right|$$

against $\frac{K_n}{2} + \frac{(N_{(n-1)} + N_{(n+1)})}{4}$ or $\frac{N_n}{2} + \frac{(K_{(n-1)} + K_{(n+1)})}{4}$ respectively, where a weighting factor of ½ is applied to the nearest neighbour signals.

Therefore according to a further aspect of the invention there is provided a method of weighting signals from adjacent pixels along a linear array used for detecting x-rays and thereafter determining material identification, the array having alternate portions which are arranged to detect higher and lower molecular weight materials and provide corresponding output signals K and N, in which an effective grey level is determined as $\frac{K_n}{2} + \frac{(N_{(n-1)} + N_{(n+1)})}{4}$ for signal K or $\frac{N_n}{2} + \frac{(K_{(n-1)} + K_{(n+1)})}{4}$ for signal N, in which K is the signal output from one alternate portion at position n along the array, and N is the signal from an adjacent other alternate portion along the array, and thereafter materials identification is determined by plotting

$$\left| K_n - \left( \frac{N_{(n-1)} + N_{(n+1)}}{2} \right) \right| \qquad \text{or} \qquad \left| N_n - \left( \frac{K_{(n-1)} + K_{(n+1)}}{2} \right) \right|$$

against $\frac{K_n}{2} + \frac{(N_{(n-1)} + N_{(n+1)})}{4}$ or $\frac{N_n}{2} + \frac{(K_{(n-1)} + K_{(n+1)})}{4}$ respectively, where a weighting factor of ½ is applied to the nearest neighbour signals.

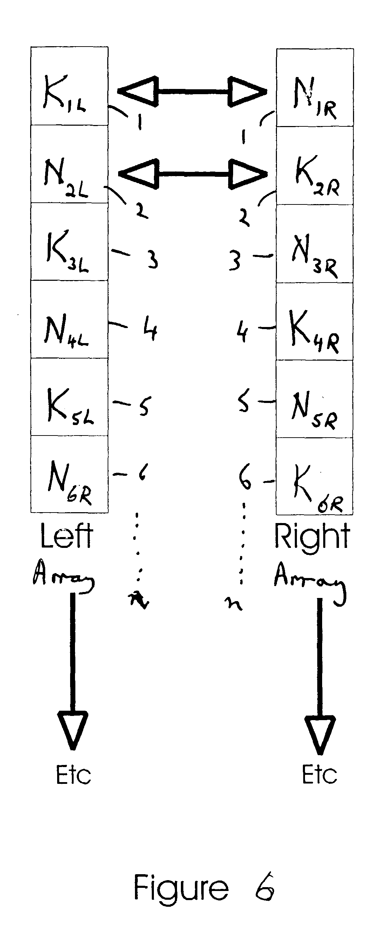

Where stereoscopic images are to be derived using two divergent beams from a single x-ray source, two linear array detectors according to the invention are geometrically aligned so that an offset of one pixel exists between them in such a way that one portion, e.g. a thick section, of scintillator on say the left-hand array is exactly opposite an alternate portion, e.g. a thin section, of scintillator on the right-hand array. This arrangement is shown in Figure 6.

The materials discrimination factor can now be determined using the signal K from the left-hand array with the corresponding signal N on the right array (using the notation K and N as before) and so for position n, the grey scale can be determined as

$$\left( \frac{K_{nL} + N_{nR}}{2} \right),$$

and thereafter materials discrimination can be determined by plotting $|K_{nL} - N_{nR}|$ against

$$\left( \frac{K_{nL} + N_{nR}}{2} \right).$$

This method can be used in combination with the other methods as described above.

Therefore according to yet another aspect of the invention there is provided a method of weighting signals along a pair of parallel spaced linear arrays used for detecting x-rays used to provide a stereoscopic pair of images and thereafter determining material identification, the arrays having alternative portions which are arranged to detect higher and lower molecular weight materials and provide corresponding output signals K and N, and in which a portion of one type in one array corresponds to a portion of the alternative type in the other array, in which method an effective grey scale level is determined as

$$\left( \frac{K_{nL} + N_{nR}}{2} \right),$$

and a material discrimination is determined by plotting $|K_{nL} - N_{nR}|$ against

$$\left( \frac{K_{nL} + N_{nR}}{2} \right).$$

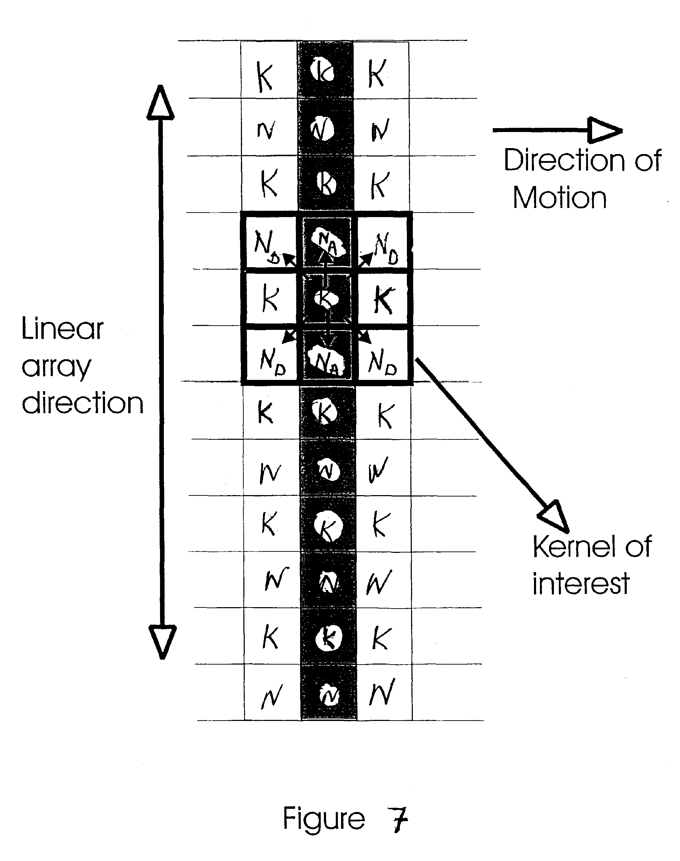

A further method relates to the dynamic nature in which the linear array operates. Relative lateral movement between the object of interest and the x-ray detecting linear array must exist for a usable image to be produced. For a detector array according to the invention this will result in a pixel pattern produced as shown in Figure 7 where $N_A$ and $N_D$ represent differing portions in the arrays, the subscripts L and R signify a portion from the left and right arrays respectively, and the subscript n signifies the position of that portion along the arrays.

A section of the pixel pattern is indicated as Kernel of Interest which is a 3x3 matrix having one portion K at its centre. This central pixel has two with nearest neighbours N of different properties, one either side along the length of the linear array and four nearest neighbours N located diagonally at its corners. In that connection the notations K and N are equivalent to those used in the previous methods.

Using standard image processing techniques a weighted value for a signal N corresponding to an adjacent position K can be derived such that:-

$$N_W = f_n (K_A, K_D).$$

This is the situation shown in Figure 7.

All values of that type of portion are treated in that way and so are the differing portions K, where, by a similar process, the weighted value for a signal K corresponding to an adjacent position N will be:-

$$K_W = f_n (N_A, N_D).$$

The actual weighting factors for the adjacent pixels along the array and those which are diagonal thereto can be derived empirically or determined theoretically from the particular embodiment of the invention as a function of spectral output of the x-ray source, the sicntillator types, filter types and the dynamic range of the signal sampling.

Thereafter the materials identification plot will become:

$$\left| K_W - N_W \right| \text{ versus } \left( \frac{K_W + N_W}{2} \right).$$

Therefore according to yet another aspect of the invention there is provided a method of weighting signals from a pixel along a linear array used for detecting x-rays and thereafter determining identification of material through which the x-rays have passed, the array having alternate portions along its length which are arranged to detect higher and lower molecular weight materials and which provide corresponding output signals N and K, respectively, in which a weighted value to provide an effective grey scale level for a signal N corresponding to an adjacent position K is derived such that:-

$$N_W = f_n (K_A, K_D),$$

and a weighted value to provide an effective grey scale level for a signal K corresponding to an adjacent position N is derived such that :-

$$K_W = f_n (N_A, N_D).$$

where the subscript A refers to adjacent pixels providing the signal from which N or K is taken, and the subscript D refers to the signal from the adjacent pixels of preceding and succeeding signals to the pixel N or K, respectively, and in which the material identification is determined by plotting:

$$\left| K_W - N_W \right| \text{ versus } \left( \frac{K_W + N_W}{2} \right).$$

The linear array detector according to the invention has the following important features:-

i. When two are used in a stereoscopic imaging mode they produce only the same number of signals as a standard sandwich type detector having a materials identification capability.
ii. The imaging resolution of the detector is not compromised.

iii. Improved materials identification is possible since at least two beams (or more) are available in stereoscopic mode and a range of signal processing methods as described herein are possible - (for the sandwich type detector shown in Figure 3A there are two signals for each pixel and it is not necessary to adopt the methods shown in Figures 5 to 7 and if one tried to adopt these methods the number of signals to be processed would be impractical).

iv. The scintillator used in the arrays according to the invention can be used either with photodiode detectors or optical fibre/camera combinations.

**Claims**

1. A linear array detector for use in creating an x-ray image after passage of a thin collimated curtain of these x-rays through an object, this detector having alternating portions of first and second types along its length and of pixel size as measured along the length of the linear array detector, each of the said types comprising scintillator material, optionally filter material, and detector means for detecting light signals corresponding to x-ray impingement on the scintillator material, the said first type of portion having a thickness of scintillator material and/or a filter such that the scintillator material provides a signal corresponding to the passage of the x-rays through an object or portion of that object of relatively low molecular weight and the said second type of portion having a thickness of scintillator material and/or a filter such that the scintillator material provides a signal corresponding to the passage of the x-rays through an object or portion of that object of relatively high molecular weight.

2. A linear array detector as claimed in Claim 1 in which there are alternating thicker and thinner portions of scintillator, the material of the scintillator providing the required attenuation in the thicker layer of scintillator.

3. A linear array detector as claimed in Claim 2 in which the attenuation is supplemented by filter layers associated with the thicker portion of scintillator or filter materials over both portions.

4. A linear array detector as claimed in Claim 1 in which the scintillator is of constant thickness but alternate pixel portions of this are provided with filters to provide the discrimination.

5. A linear array detector as claimed in any preceding claim in which the lengths of the first and second portions along the array vary from 10 microns to 10 mm.

6. An x-ray machine for producing a stereoscopic image of an object comprising:

   an x-ray source with two or more diverging but parallel curtain beams of x-rays,
   two or more linear array detectors, each associated with one of the said beams,
   means for passing the object under test past and through the curtain beams,
   the output of the detector being processed to provide a stereoscopic pair of images of the said object,

   characterised in that each linear array detector has alternating portions of first and second types along its length and of pixel size as measured along the length of the linear array detector, each of the said types comprising scintillator material, optionally filter material, and detector means for detecting light signals corresponding to x-ray impingement on the scintillator material, the said first type of portion having a thickness of scintillator material and/or a filter such that the scintillator material provides a signal corresponding to the passage of the x-rays through an object or portion of that object of relatively low molecular weight and the said second type of portion having a thickness of scintillator material and/or a filter such that the scintillator material provides a signal corresponding to the passage of the x-rays through an object or portion of that object of relatively high molecular weight.

7. An x-ray machine as claimed in Claim 6 in which there are alternating thicker and thinner portions of scintillator, the material of the scintillator providing the required attenuation in the thicker layer of scintillator.

8. An x-ray machine as claimed in Claim 7 in which the attenuation is supplemented by filter layers associated with the thicker portion of scintillator or filter materials over both portions.

9. An x-ray machine as claimed in Claim 6 in which the scintillator is of constant thickness but alternate pixel portions of this are provided with filters to provide the discrimination.

10. An x-ray machine as claimed in any of claims 6 to 9 in which the lengths of the first and second portions along the array vary from 10 microns to 10 mm.

**11.** A method of weighting signals from adjacent pixels along a linear array used for detecting x-rays and thereafter determining material identification, the array having alternate portions which are arranged to detect higher and lower molecular weight materials and provide corresponding output signals K and N, in which an effective grey scale level is determined as

$$\left( \frac{K_n + N_{(n+1)}}{2} \right)$$

for a signal K and the equivalent

$$\left( \frac{N_n + K_{(n+1)}}{2} \right)$$

for a signal N, and thereafter the material discrimination is derived by plotting $|K_n - N_{(n+1)}|$ or $|N_n - K_{(n+1)}|$ against

$$\left( \frac{K_n + N_{(n+1)}}{2} \right) \text{ or } \left( \frac{N_n + K_{(n+1)}}{2} \right),$$

respectively, where n corresponds to the number of the pixel along the array.

**12.** A method of weighting signals from adjacent pixels along a linear array used for detecting x-rays and thereafter determining material identification, the array having alternate portions which are arranged to detect higher and lower molecular weight materials and provide corresponding output signals K and N, in which an effective grey level is determined as $\frac{K_n}{2} + \frac{(N_{(n-1)} + N_{(n+1)})}{4}$ for signal K or $\frac{N_n}{2} + \frac{(K_{(n-1)} + K_{(n+1)})}{4}$ for signal N, in which K is the signal output from one alternate portion at position n along the array, and N is the signal from an adjacent other alternate portion along the array, and thereafter materials identification is determined by plotting

$$\left| K_n - \left( \frac{N_{(n-1)} + N_{(n+1)}}{2} \right) \right|$$

or

$$\left| N_n - \left( \frac{K_{(n-1)} + K_{(n+1)}}{2} \right) \right|$$

against $\frac{K_n}{2} + \frac{(N_{(n-1)} + N_{(n+1)})}{4}$ or $\frac{N_n}{2} + \frac{(K_{(n-1)} + K_{(n+1)})}{4}$ respectively, where a weighting factor of ½ is applied to the nearest neighbour signals.

**13.** A method of weighting signals along a pair of parallel spaced linear arrays used for detecting x-rays used to provide a stereoscopic pair of images and thereafter determining material identification, the arrays having alternative portions which are arranged to detect higher and lower molecular weight materials and provide corresponding output signals K and N, and in which a portion of one type in one array corresponds to a portion of the alternative type in the other array, in which method an effective grey scale level is determined as

$$\left( \frac{K_{nL} + N_{nR}}{2} \right),$$

and a material discrimination is determined by plotting $|K_{nL} - N_{nR}|$ against

$$\left( \frac{K_{nL} + N_{nR}}{2} \right).$$

14. A method of weighting signals from a pixel along a linear array used for detecting x-rays and thereafter determining identification of material through which the x-rays have passed, the array having alternate portions along its length which are arranged to detect higher and lower molecular weight materials and which provide corresponding output signals N and K, respectively, in which a weighted value to provide an effective grey scale level for a signal N corresponding to an adjacent position K is derived such that:-

$$N_W = f_n (K_A, K_D),$$

and a weighted value to provide an effective grey scale level for a signal K corresponding to an adjacent position N is derived such that :-

$$K_W = f_n (N_A, N_D).$$

where the subscript A refers to adjacent pixels providing the signal from which N or K is taken, and the subscript D refers to the signal from the adjacent pixels of preceding and succeeding signals to the pixel N or K, respectively,
and in which the material identification is determined by plotting:

$$\left| K_W - N_W \right| \text{ versus } \left( \frac{K_W + N_W}{2} \right).$$

X-ray Source

Conveyor Belt

Object under
Inspection

Linear x-ray
Detector Array

Monitor

Operator
Controls

Framestore and
Control electronics

**Figure 1**

**Figure 2**

Figure 3 A

Figure 3 B

Optional filter **OF**

Filter
**F**

**S**cintillator

$T_k$  $T_n$  $T_k$  $T_n$

LA

Linear array direction

X-ray beam input

F

OF

$T_kS$

$T_kS$

$T_nS$

$T_nS$

LA

Optical output

Signals to photodiodes
or
optical fibres

Figure 4A

Figure 4 B

Figure 5

Figure 6

Figure 7